# EUROPEAN PATENT APPLICATION

(11) **EP 2 130 438 A1**
(43) Date of publication of application: **09.12.2009**
(21) Application number: 09158136.3
(22) Date of filing: 17.04.2009
(51) Int. Cl.: A23C 19/08, A23C 19/082, A23C 19/084, A23C 21/02

(54) **Cheese Products Containing Galacto- Oligosaccharides and Having Reduced Lactose Levels**

(30) Priority: 02.06.2008 US 131491
(71) Applicant: Kraft Foods Global Brands LLC, Northfield, IL 60093 (US)
(72) Inventor: Laye, Isabelle, Wheeling, IL 60090 (US); Silver, Richard, Wilmette, IL 60091 (US); Rodriguez, Ana, Evanston, IL 60202 (US)
(74) Representative: Murray, Adrian D'Coligny

(57) **Abstract**

The processes described herein are directed to cream cheese products containing galacto-oligosaccharides and having significantly reduced lactose levels. More specifically, lactose-containing dairy substrates are contacted with lactase enzyme(s) having hydrolytic and trans-galactosylation activities effective for converting at least 20 percent of the lactose in the dairy substrate to galacto-oligosaccharides. The enzyme-treated dairy substrate is then processed into galacto-oligosaccharide containing cream cheese products having reduced lactose levels. The cream cheese products provided herein have excellent nutritional and organoleptic properties.

## Description

The processes described herein are directed to cheese products (e.g., cream cheese, cottage cheese, and process cheese) containing galacto-oligosaccharides and having significantly reduced lactose levels. More specifically, lactose-containing dairy substrates are contacted with lactase enzymez(s) having hydrolytic and trans-galactosylation activities effective for converting lactose to galacto-oligosaccharides. The cheese products have excellent nutritional and organoleptic properties. Especially preferred are cream cheese products prepared by the processes described herein.

### BACKGROUND OF THE INVENTION

Cheese products are a favorite that extend across generations and cultures. In America and Europe, in particular, people enjoy cheese products at any meal and at many times in between. Therefore, opportunities to increase the nutritional values and/or health benefits of cheese products without significantly impacting the organoleptic properties of the resulting cheese product would be highly desirable.

Cottage cheese is a soft, mild acid-coagulated uncured cheese made primarily from a milk source. Cottage cheese is made up of relatively small pieces or particles of cottage cheese curd which are suspended in, or blended with, a creamy dressing. In a conventional manufacturing process, a milk source (i.e., full fat, reduced fat, or skim milk depending on the level of fat desired) is pasteurized and homogenized. After cooling (normally to about 32 to about 37° C), the milk source is inoculated with conventional lactic acid-generating culture. Rennet may also be used to aid the coagulation. The mixture is typically held at the inoculation temperature until it has ripened and a coagulum is formed. The acidity of the coagulum is from about 0.7 percent to about 1 percent (calculated as percent equivalent lactic acid). After the coagulum has been formed and the desired acidity is obtained, the curd is cut into small pieces with agitation. The cut curd is heated to about 48 to about 55° C and held at that temperature tor abort 100 to 140 minutes. The curds are then separated from the whey. The curds are then suspended in, or blended into, a creamy dressing to form the cottage cheese product. The resulting cottage cheese product is then normally dispensed into retail containers and then refrigerated.

Processed cheese, widely available in sliced and loaf forms, has become on of the most popular selling cheese products. Processed cheese products are particularly popular with children. Process cheese is conventionally prepared by grinding and/or mixing while heating one or more varieties of milk-fat containing natural cheeses, such as, for example, Cheddar cheese, Colby cheese, Swiss cheese, Brick cheese, Muenster cheese, pasta filata cheese, washed curd, and granular curd cheese. The resulting cheese is then blended with other dairy products, such as non-fat dry milk and whey solids, and emulsifying salts, such as disodium phosphate, at temperatures which are sufficiently elevated to pasteurize the cheese, to produce a homogeneous, pumpable, fluid cheese material that may be formed into sheets, slices, or other desired forms.

There are three general types of process cheese: pasteurized process cheese, pasteurized process cheese food, and pasteurized process cheese spread. Process cheeses have certain characteristics that are desirable to cheese consumers, such as a smooth, creamy texture and a slight firmness that is attributable to the presence of fat in the process cheese formulation, although fat-free and reduced fat process cheeses can also be made having smooth and creamy texture. Based on the Standards of Identity, the main differences between the three types of process cheese are their moisture and fat content, and the use of optional ingredients in their manufacture. These cheeses typically are made in large quantities using a horizontal cooker (sometimes called a laydown cooker). Often, the process cheese is then automatically packaged in airtight cartons.

Cream cheese is a soft, mild acid-coagulated uncured cheese typically made from a mixture of cream and milk. Cream cheese is stored under refrigeration conditions and has a smooth and butter-like consistency. The texture and body of cream cheese at refrigeration temperatures is such that the cream cheese can be sliced and/or spread. Cream cheese-like spreads are products which may not meet all standards of identity for cream cheese but have many of the functional properties of cream cheese.

In traditional processes for making cream cheese, uncultured whole milk and/or skim milk and sweet cream are blended in pre-selected proportions to form a cream cheese mix. The cream cheese mix is pasteurized and homogenized, after which it is cooled, usually to a temperature between about 16.7 to about 43°C, and is then inoculated with a lactic acid culture. Conventionally, a cream and milk mixture is cultured with lactic acid-forming bacteria to convert lactose in the mixture to lactic acid. The culturing continues until the pH drops sufficiently to form a curd. The curd is separated from the whey and processed to form cream cheese. In newer processes, dairy ingredients, such as milk protein concentrate, whey protein concentrate, and cheese whey, both in dried powder form or in concentrated liquid form, are cultured to the desired pH and then dairy fat (such as cream and/or milkfat) or non-dairy fat (such as soybean or sunflower oil) is added and the mixture is processed to form a cream cheese spread or imitation cream cheese spread, respectively, without a curd separation step. Alternatively, direct addition of an acidulant, such as lactic acid or glucono-delta-lactone, may be used in place of culturing. Hybrid processes incorporate optional dairy ingredients ("ODI") into conventional processes. The term "optional dairy ingredient" is defined in 21 C.F.R. § 133.124(d) as "Cream, milk, skim milk, buttermilk, cheese whey, any of the foregoing from which part of the water has been removed, anhydrous milkfat, dehydrated cream, skim milk cheese for manufacturing, and albumin from cheese whey." in all these processes, additional ingredients, including salt and stabilizers, are typically added.

Generally, even though lactic acid-forming bacteria convert lactose to lactic acid during conventional processes, the conversion is not complete; therefore, most cream cheese products still contain significant levels of lactose (relative to persons having difficulty digesting lactose). Avoiding food products containing lactose can be very difficult for consumers who have difficulty digesting lactose.

Lactase enzyme is found in varying amounts in the small intestines of persons who are not lactose intolerant. Lactase hydrolyzes lactose into glucose and galactose, which are then readily absorbed into the bloodstream. Lactase is generally produced in large amounts at birth and in early childhood when milk is consumed as a primary part of the diet. After early childhood, lactase production often decreases and remains low in adulthood. If low enough, it may cause insufficient digestion of lactose. This condition is often referred to as lactose malabsorption or lactose maldigestion. When lactose malabsorption is accompanied by clinical symptoms, the condition is referred to as lactose intolerance.

Poor lactose digestion can also result from injury, surgery, or disease in the intestines. Although rare, congenital lactose malabsorption is a complete loss of lactase caused by an autosomal recessive defect and symptoms arise soon after birth. When the synthesis of lactase enzymes by the body decreases, lactose digestion is reduced and symptoms of lactose intolerance can develop. It is reported that more than about 70 percent of adults worldwide have some degree of lactose intolerance. De Vrese et al., Am. J. Clin. Nutr., 73(suppl): 421 S-9S (2001); Kretchmer, Gastroenterology, 61: 805-313 (1971).

It has been reported that most lactose malabsorbers can tolerate about 0.5 to about 7 grams lactose without symptoms. De Vrese et al., Am. J. Clin. Nutr., 73 (suppl): 421S-9S (2001). Lactose intolerant consumers may be more tolerant of cheese products which fall at the lower end of this range. For example, aged cheeses, such as cheddar or swiss, typically contain less than about 1 percent lactose (i.e., less than about 0.5 grams per 1 ounce serving), while cream cheese, particularly products made with ODI, may contain about 2 to about 10 percent lactose (i.e., over about 3 grams per 1 ounce serving).

Removing lactose from cheese products can be costly. Lactose can be removed from milk by physical processes, such as by ultrafiltration to produce milk protein concentrate and whey protein concentrate, but this reduces the bulking and nutritional value contributed by the lactose as well as adding production costs. Low lactose milk is commercially available but is generally not well accepted by consumers because the milk product is very sweet as a result of the enzymatic hydrolysis of lactose into galactose and glucose. Thus, cheese products having reduced lactose levels and taste similar to full lactose cheese products would be very desirable for many consumers.

It is also known that lactase can produce compounds called galacto-oligosaccharides ("GOS") when the lactase enzymes have hydrolytic and transgalactosylation activities. The hydrolytic activity is necessary to break down the lactose in order to provide a substrate on which the trans-galactosylation activity can act. Trans-galactosylation is the addition of galactosyl units to lactose, galactose, or existing galacto-oligomers to form oligomers. While it is known that GOS are non-digestible carbohydrates that pass through the small intestine intact, it has been found that GOS are fermented in the colon by *Bifidobacterium.* GOS has been identified as a prebiotic that selectively promotes the growth of bifidobacteria and other beneficial intestinal flora, such as *L. acidophilus, L. casei,* and *L. rhamnosus.* Bifidobacteria and other lactic acid bacteria are anaerobic bacteria among the natural flora of the human intestines. Other prebiotics which promote the growth of beneficial intestinal microflora include inulin, mannoligoosaccharides, cellooligosaccharides, barley and oat beta-glucan, resistant starch, hydrolyzed konjac, isomaltulose, polydextrose, and the like. It is believed that bifidobacteria have a unique ability to exploit GOS as a carbon source, thus allowing bifidobacteria to outcompete other organisms.

Numerous health benefits associated with bifidobacteria have been reported. As reported by Hughes et al., Food Technol., 45: 64-83 (1991), bifidobacteria have been shown to play roles in: (1) maintaining the normal intestinal balance; (2) improving lactose tolerance and digestion of milk products; (3) having antitumorigenic activity; (4) reducing serum cholesterol levels; (5) synthesizing B-complex vitamins; and (6) enhancing absorption of dietary calcium. It has also been found that bifidobacteria are beneficial because they produce lactic acid, acetic acid, and formic acid, thus lowering the pH in the intestinal tract, which assists in preventing the growth of pathogenic organisms.

A proper balance of the natural flora is important to provide for normal functioning of the intestines. Generally, the natural flora is protective against pathogenic organisms. Because the natural flora may be disturbed by intake of antibiotics, it is sometimes necessary to replenish the beneficial bacteria. As a result, bifidobacteria, such as *B. bifidum* and *B. longum,* among others, are commonly used as probiotics and are often found in fermented foods, such as yogurt, cheese, fermented vegetables, and the like, as well as being used as food additives, such as in infant formulas. Supplementing food products with GOS allows one to selectively enhance the growth of bifidobacteria both in the product and in the intestines of the consumer, thus providing the health benefits associated with bifidobacteria.

It is known that GOS can be produced by culturing certain microorganisms or using microorganism-derived enzymes in a lactose-containing medium. For example, U.S. Patent No. 6,555,348 discloses using an enzyme having high transgalactosylation activity; only 44 percent yield of GOS from lactose was obtained. JP2195894 to Nitto Denko Corp. is directed to converting lactose to galacto-oligosaccharides using beta-galactosidase and separating the galacto-oligosaccharides with an ultrafiltration membrane. Preferably, a solution containing lactose is passed through an ultrafiltration membrane having immobilized beta-galactosidase to separate galacto-oligosaccharides from the permeate. JP2072890 to Ajinomoto KK is directed to obtaining galacto-oligosaccharides by treating lactose or a lactose-containing material with a microbe of the genus Rhodotorula, Sterigmatomyces, or Sirobasidium. EP0778885 to Gervais Danone Co. is directed to preparing a fermented product enriched in galacto-oligosaccharides by culturing *Streptococcus thermophilus* in medium comprising milk protein hydrolysate and lactose. The medium may further be inoculated with bifidobacteria. EP 0458358 to Snow Brand Milk Prod. Co. is directed to a process for making skim milk powder containing galacto-oligosaccharides by contacting concentrated milk with beta-galactosidase.

Most lactase enzymes have slight trans-galactosylation activity so it is likely that GOS are present in trace amounts in the human gut after ingestion of lactose-containing food products. Likewise, it has been reported that human milk contains some GOS, Boehm et al., J. Nutr., 137:847S-849S (March 2007). However, optimal trans-galactosylation activity is concentration dependent and works best in concentrated solutions of lactose, unlike the typical conditions present in the gut.

Unsupplemented fermented milk drinks known in the art typically contain about 1 percent GOS or less. Yogurt-type food products are commercially available, such as by Yakult, which have low levels of GOS. The commercially available product "Oligomate 55" is a purified concentrate and contains about 55 percent GOS (Yakult, Tokyo, Japan).

The processes described herein meet longstanding needs in the art discussed above. For example, the processes meet the important need for providing reduced lactose cheese products, particularly cream cheese products, as well as providing the health benefits of GOS. Furthermore, the processes meet the need of providing reduced lactose cheese products without undesirable sweet flavor. Finally, the processes provide cheese products containing GOS and having reduced levels of lactose while maintaining desirable organoleptic properties in the final product.

### SUMMARY OF THE INVENTION

The cheese products and methods for making the cheese products described herein are directed to cheese products selected from the group consisting of cream cheese, cottage cheese, and process cheese which contain significantly increased levels of galacto-oligosaccharides ("GOS") and significantly reduced levels of lactose. The methods described herein reduce the lactose levels in the final cheese product by at least about 25 percent, preferably at least about 50 percent, and more preferably at least about 75 percent. The processes described herein can reduce lactose in the cheese products to less than about 1 gram per serving, an amount that can be tolerated by most lactose-intolerant individuals.

The cheese products provided herein are nutritionally-enhanced cheese products having increased soluble fiber content, reduced caloric content, excellent organoleptic properties, improved texture, and flavor. Further, the processes described herein reduce the glycemic index of the cheese products because GOS are more slowly absorbed than lactose or its hydrolysis products. Finally, these processes can reduce the cost of production of cheese products, particularly cream cheese products, because GOS surprisingly provide improved texture to the cream cheese product, thus permitting reduced use of stabilizers, or by allowing for increased moisture content without syneresis.

The methods described herein can be used for making cottage cheese products, cream cheese products, or process cheese products having significantly increased levels of GOS and significantly reduced levels of lactose. GOS is a soluble fiber comprised of oligomers containing from about 3 to about 10 monosaccharide units (about 3 to about 5 monosaccharide units on average). Cheese products known in the art contain little or no GOS (i.e., less than about 0.1 gram GOS per 1 ounce serving). The processes described herein provide cheese products having at least about 0.5 grams GOS per serving, preferably at least about 0.7 grams of GOS per serving, more preferably at least about 1.0 gram GOS per serving. As defined herein, the serving size for process cheese and cream cheese is 1 ounce per serving and the serving size for cottage cheese is 4 ounces per serving. Conventional cream cheese products generally contain about 4 to about 10 percent lactose (e.g., up to about 3 grams per 1 ounce serving). The cheese products provided herein have less than about 1 gram lactose per 1 ounce serving. Conventional process cheese products generally have about 1 to 10 percent lactose and most commonly about 7 to 8 percent lactose. Conventional cottage cheese products generally have about 2 to 6 percent lactose and most commonly about 4 to 5 percent lactose. The cheese products provided herein have less than about 1 gram lactose per serving.

The processes described herein provide for the production of cheese products containing significantly increased GOS content and reduced levels of lactose by treating a dairy substrate having at least 7 percent lactose with lactase enzyme having trans-galactosylation activity for a time and at a temperature effective for converting lactose present in the dairy substrate to GOS, such as at a temperature of abort 20 to about 73°C. for about 0.5 to about 24 hours, preferably at about 40 to about 65°C for about 0.5 to about 2 hours. The lactase enzyme or combination of lactase enzymes selected should have both trans-galactosylation and hydrolytic activities, preferably having a ratio of trans-galactosylation to hydrolysis activities of about 0.3 to about 1.0, preferably a ratio of about 0.8, measurable as the ratio of GOS to hydrolysis products.

Generally, the dairy substrate should contain at least about 7 percent lactose because the trans-galactosylation activity of the lactase enzyme is less efficient in dairy substrates having less than about 7 percent lactose. Preferably, the dairy substrate contains about 20 to about 50 percent lactose. Dairy substrates having lactose concentrations higher than 50 percent can be used, if desired, as long as the lactose remains soluble at such increased concentrations. However, lactose generally has low solubility at concentrations greater than 50 percent.

In an important aspect, the lactase enzymes convert about 25 to about 100 percent of the lactose present in the dairy substrate, with about 20 to about 75 percent of the converted lactose forming GOS, preferably about 30 to about 75 percent of the converted lactose forming GOS, and more preferably about 50 to about 75 percent of the converted lactose forming GOS, and the balance of the converted lactose forming hydrolysis products, such as glucose and galactose. The dairy substrate is then processed to form a cheese product containing significantly increased GOS content and significantly reduced lactose levels.

Lactase enzymes having hydrolytic and trans-galactosylation activities may be incorporated into a number of cheese processes to provide a cheese product having significantly increased GOS content and reduced lactose levels. For example, the enzyme treatment step can be incorporated into traditional curd-type processes, wheyless processes (i.e., processes that do not include separation of curd and whey), as well as hybrid processes known in the art. Cheese processes that do not include a whey separation step are particularly desirable because lactase enzyme can be used at optimum lactose concentrations and all GOS formed will remain in the product because there is no removal of whey or permeate during processing.

In one aspect, cottage cheese products having significantly increased GOS content and significantly reduced lactose content can be prepared by combining curd and dressing components, where both components have been prepared using lactase enzyme(s) having trans-galactosylation and hydrolytic activities to convert lactose to GOS. Cottage cheese products containing curd and dressing where only one of the curd or dressing components have been prepared with lactase enzyme treatment generally results in cottage cheese products having higher lactose content and lower GOS content than cottage cheese products where both components were prepared with lactase enzyme treatment. Cottage cheese curd is prepared by treating a dairy substrate comprising a milk source with lactase enzyme(s) having trans-galactosylation and hydrolytic activities and held for a time and at a temperature effective to convert at least about 20 percent of the lactose in the dairy substrate to GOS. The resulting curd is then separated from the whey. While it is generally preferred that the dairy substrate to be treated with lactase enzyme(s) includes at least about 7 percent lactose, skim milk is commonly used as the milk source in the preparation of cottage cheese curd and includes only about 4 percent lactose. The dairy substrate can be acidified during or after enzyme treatment with a lactic acid-producing culture or by adding edible acid to reduce the pH to the desired acidity, such as about pH 4.3 to about 5.2, to form a coagulum. Alternatively, the dairy substrate can be acidified after enzyme treatment by the addition of an edible acid to reduce the pH to the desired acidity, such as about pH 4.3 to about 5.2, to form a coagulum. The aqueous cottage cheese dressing comprises cream and other dairy ingredients, such as non-fat dry milk ("NFDM"), milk protein concentrate, whey protein concentrate, and the like. The lactase enzyme(s) having trans-galactosylation and hydrolytic activities is added to the dressing and held for a time and at a temperature effective to convert at least about 20 percent of the lactose in the dressing to GOS. About 50 to about 70 percent lactase-treated curd, preferably about 60 percent lactase-treated curd, is combined with about 30 to about 50 percent lactase-treated dressing, preferably about 40 percent lactase-treated dressing, to provide the cottage cheese product having at least about 0.5 grams GOS and less than about 1 gram lactose per 4 ounce serving.

In another aspect, process cheese products having significantly increased GOS content and significantly reduced levels of lactose can be prepared by blending and cooking natural cheese with emulsifying salts and a dairy substrate treated with the method described herein. Generally, the dairy substrate is prepared by treating a dairy mixture having at least 7 percent lactose with lactase enzyme(s) having transgalactosylation and hydrolytic activities for a time and at a temperature to convert at least about 20 percent of the lactose in the slurry to GOS, such as about 0.25 to about 24 hours at about 20 to about 70°C, preferably for about 0.5 to about 2 hours at about 40 to about 65°C, although the precise conditions should be selected based on the optimum conditions for the particular lactase enzyme or combination of enzymes used. The dairy substrate is added to any remaining ingredients, such as emulsifying salts, and blended with the natural cheese (such as, for example, Cheddar cheese, Colby cheese, Swiss cheese, Brick cheese, Muenster cheese, pasta filata cheese, washed curd, and granular curd cheese) and cooked to form process cheese. The process cheese product has at least about 0.5 grams galacto-oligosaccharides per 1 ounce serving and less than about 1 gram lactose per 1 ounce serving.

Preferably, the methods described herein are used to prepare cream cheese products having significantly increased GOS content and significantly reduced levels of lactose. As used herein, the term "cream cheese product" refers to traditional-type cream cheese products (e.g., cream cheese processes involving separation of curds and whey), cream cheese products made without separation of curds and whey, imitation cream cheese products (e.g., cream cheese products including non-dairy fats, such as vegetable oil), and the like.

In one aspect, a wheyless process is provided for the production of a cream cheese product having GOS and significantly reduced lactose levels, the process comprising: (1) preparing a dairy substrate comprising at least about 7 percent lactose, preferably about 20 percent to about 50 percent lactose; (2) heating the dairy substrate to about 60 to about 93° C; (3) homogenizing the heated dairy substrate to form a dairy blend; (4) cooling the dairy blend or allowing the dairy blend to cool to about 20 to about 70° C; (4) treating the dairy blend with a lactase enzyme(s) having trans-galactosylation activity and hydrolytic activity for a time and at a temperature effective for converting at least 20 percent of the lactose in the homogenized blend to GOS; (5) adjusting the pH of the enzyme-treated mixture to about 4.3 to about 5.2; (6) heating the pH-adjusted mixture to about 76 to about 93° C for about 5 to about 20 minutes to form a cooked mixture; and (7) homogenizing the cooked mixture to provide the final cream cheese product comprising about 1 to about 36 percent fat, about 5 to about 15 percent protein, and about 45 to about 75 percent moisture, at least about 0.5 grams galacto-oligosaccharides per 1 ounce serving, and less than about 1 gram lactose per 1 ounce serving.

Additional cream cheese ingredients (such as fat (e.g., milkfat, cream, non-dairy fats, or the like), stabilizers, salt, water, and the like) can be added before or after the enzyme treatment step such that the final cream cheese product comprises about 1 to about 36 percent fat, about 5 to about 15 percent protein, and about 45 to about 75 percent moisture.

In another aspect, a hybrid process is provided for the production of a cream cheese product having significant levels of GOS and significantly reduced levels of lactose, the process comprising:
(1) preparing a dairy curd component by a process comprising:
   (a) preparing a dairy mixture selected from the group consisting of milk, cream, milkfat, and mixtures thereof;
   (b) heating the dairy mixture to about 60 to about 93°C;
   (c) homogenizing the heated dairy mixture to form a homogenized blend;
   (d) cooling the homogenized blend to about 18 to about 45°C;
   (e) adjusting the pH of the homogenized blend to about 4.3 to about 5.2 to form curd and whey; and
   (f) separating the curd from the whey formed in step (e) to form a dairy curd component;
(2) preparing an enzyme-treated dairy component by a process comprising:
   (a) preparing a dairy substrate having a lactose levels of at least about 7 percent;
   (b) heating the dairy substrate to about 20 to about 73°C; and
   (c) treating the dairy witch lactase enzyme(s) having hydrolytic and trans-galactosylation activities at a temperature and for a time effective for converting at least about 20 percent of the lactose present in the dairy substrate to GOS to form an enzyme-treated dairy component;
(3) blending about 10 to about 75 percent of the enzyme-treated dairy component of step (2) with about 25 to about 90 percent of the dairy curd component of step (1) and optionally about 0.5 to about 1 percent salt and about 0.1 to about 1 percent stabilizer to provide a cream cheese blend;
(4) heating the cream cheese blend to about 77 to about 93°C for about 5 to about 20 minutes; and
(5) homogenizing the cream cheese blend to form the cream cheese product comprising about 1 to about 36 percent fat, about 5 to about 15 percent protein, and about 45 to about 75 percent moisture, at least about 0.5 grams galacto-oligosaccharides per 1 ounce serving, and less than about 1 gram lactose per 1 ounce serving. Some lactose is likely lost in the whey.

In another aspect, a process including separation of curd and whey with GOS recovery from the separated whey is provided for the production of a cream cheese product having significant levels of GOS and significantly reduced levels of lactose, the process comprising:
(1) preparing a dairy substrate having a lactose levels of at least about 7 percent, preferably about 20 to about 50 percent lactose;
(2) heating the dairy substrate to about 60 to about 93°C;
(3) homogenizing the heated dairy substrate to form a dairy blend;
(4) cooling the dairy blend to about 20 to about 70°C;
(4) treating the dairy blend with lactase enzyme(s) having trans-galactosylation activity and hydrolytic activity at a temperature and for a time effective to convert at least about 20 percent of the lactose present in the dairy blend to GOS to provide an enzyme-treated dairy blend;
(6) adjusting the pH of the enzyme-treated dairy blend to about 4.3 to about 5.2 to form curds and whey;
(7) separating the curds from the whey such that GOS is recovered from the separated whey and combined with the curds for subsequent processing;
(8) optionally adding about 0.5 to about 1 percent salt and about 0.1 to about 1 percent stabilizer;
(9) homogenizing the separated curds to form a homogenized cream cheese blend;
(10) heating the cream cheese blend at a temperature and for a time effective for functionalizing the dairy proteins and stabilizers, if added; and
(11) homogenizing the heated cream cheese blend to produce the final cream cheese product having about 1 to about 36 percent fat, about 5 to about 15 percent protein, and about 45 percent to about 75 percent moisture, at least about 0.5 grams galacto-oligosaccharides per 1 ounce serving, and less than about 1 gram lactose per 1 ounce serving.

As will be understood to one of ordinary skill in the art, the order of the steps in the processes described herein can be modified and still obtain a satisfactory cream cheese product. Additional steps can also be used, if desired. For example, additional homogenizing steps can be performed, as desired. Also, additional cream cheese ingredients (such as fat source (e.g., milkfat, cream, non-dairy fats, or the like), protein source, water, and the like) can be added before or after the enzyme treatment step, as needed to provide the desired fat, protein, and moisture content of the final cream cheese product.

The cheese products provided by the processes described herein include at least about 0.5 grams GOS per serving, preferably at least about 0.7 gram GOS per serving, more preferably at least about 1.0 gram GOS per serving and 1 gram or less of lactose per serving. This level of lactose is sufficiently low to be tolerated by most consumers with lactose intolerance.

Production costs are considerably reduced compared to adding premanufactured GOS concentrate or other prebiotic ingredients, such as inulin, to the cheese products.

In particular to the cream cheese products, the processes described herein are effective for reducing production costs because GOS surprisingly have a texturizing and stabilizing effect on the cream cheese product, thus permitting reduction in the use of stabilizers and providing increased moisture content in the final cream cheese products without syneresis.

### BRIEF DESCRIPTION OF THE DRAWINGS

FIG. 1 provides a flow diagram illustrating an embodiment of the process for making cottage cheese having significantly increased GOS content and significantly reduced levels of lactose described herein.

FIG. 2 provides a flow diagram illustrating an embodiment of the process for making process cheese having significantly increased GOS content and significantly reduced levels of lactose described herein.

FIG. 3 provides a flow diagram illustrating an embodiment of the process for making cream cheese having significantly increased GOS content and significantly reduced levels of lactose described herein.

FIG. 4 provides a flow diagram illustrating another embodiment of the process for making cream cheese having significantly increased GOS content and significantly reduced levels of lactose described herein.

FIG. 5 provides a flow diagram illustrating another embodiment of the process for making cream cheese having significantly increased GOS content and significantly reduced levels of lactose described herein.

### DETAILED DESCRIPTION OF THE INVENTION

The methods described herein provide significantly increased galacto-oligosaccharide (GOS) content and significantly reduced lactose levels in cheese products, particularly cottage cheese, cream cheese, and process cheese products. The cheese products provided herein also have increased soluble fiber content, reduced caloric content, excellent organoleptic properties, improved texture, and flavor. In particular, the cream cheese products described herein have reduced browning when used in a cooked product, such as cheesecake. Further, the processes described herein reduce the glycemic index of the cheese products because GOS are more slowly absorbed than lactose or its hydrolysis products. Surprisingly, it was found that the significantly increased GOS content allows for increased moisture content and reduces the need for added stabilizers because GOS provide a stabilizing function. It will be recognized by one of ordinary skill in the art that the processes described herein are applicable to many conventional processes of preparing cheese products.

For purposes herein, "significantly reduced lactose levels" or equivalent phrases are intended to mean that the cheese products contain less than about 1 gram lactose per serving. For purposes herein, "significantly increased GOS content" or equivalent phrases are intended to mean that the cheese products contain at least about 0.5 gram GOS per serving, preferably at least about 0.7 gram GOS per serving, and more preferably at least about 1 gram GOS per serving. As defined herein, the serving size for cream cheese and process cheese products is 1 ounce per serving and the serving size for cottage cheese products is 4 ounces per serving. Cream cheese products produced by conventional processes contain little or no GOS (i.e., less than about 0.1 gram GOS per 1 ounce serving) and about 4 to about 10 percent lactose or up to about 3 grams per 1 ounce serving. Conventional process cheese products generally have about 1 to 10 percent lactose and most commonly have about 7 to 8 percent lactose. Conventional cottage cheese products generally have about 2 to 6 percent lactose and most commonly have about 4 to 5 percent lactose. The process and cream cheese products provided herein have less than about 1 gram lactose per serving.

The processes described herein use lactase enzyme(s) having hydrolytic and trans-galactosylation activities to convert lactose present in a dairy substrate to GOS. The cheese products provided herein also provide health benefits not provided by conventional cheese products. GOS have high nutritive value for humans, including selectively promoting the growth of Bifidobacteria, Lactobacteria, and other beneficial human intestinal microflora.

Without intending to limit the scope of the processes described herein, lactase enzyme(s) having hydrolytic and trans-galactosylation activity may be incorporated into a variety of cheese processes as generally described below. Preferably, the cheese processes do not involve curd separation steps because GOS is of relatively low molecular weight (i.e., less than about 1000 Daltons) and is substantially lost in the fluid phase, such as the whey or permeate. Of course, additional process steps can be taken to recover the GOS from the fluid phase, if desired, but such additional steps add to the manufacturing time and cost.

The methods described herein are used to prepare cottage cheese, cream cheese, and process cheese products having significantly increased galacto-oligosaccharide (GOS) content and significantly reduced lactose levels. Preferably, the methods described herein are used to prepare cream cheese products.

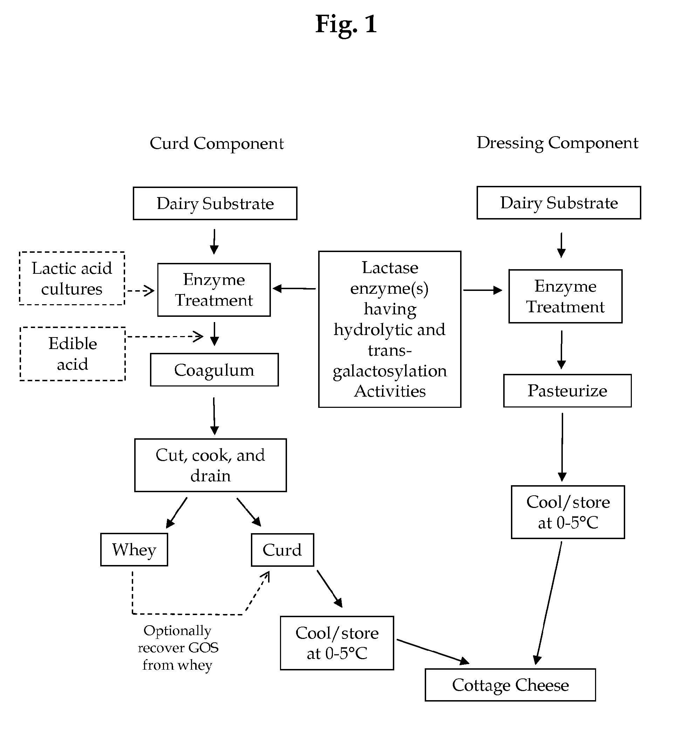

FIG. 1 illustrates an embodiment of a process for making cottage cheese having significantly increased GOS content and significantly reduced levels of lactose. Cottage cheese products having significantly increased GOS and significantly reduced levels of lactose can be prepared by combining curd and dressing components, where both components have been prepared using lactase enzyme(s) having transgalactosylation and hydrolytic activities to convert lactose present in the component to GOS. Cottage cheese products containing curd and dressing where only one of the curd or dressing components have been prepared with lactase enzyme treatment generally results in cottage cheese products having higher lactose contents and lower GOS content than cottage cheese products where both components were prepared with lactase enzyme treatment. For applications where it is acceptable for the lactose concentration to exceed about 1 gram per 4 ounce serving, it is preferable that the method be carried out where only the dressing component is prepared with a lactase treatment step. Cottage cheese products comprising both lactase-treated dressing and lactase-treated curd components have at least about 0.5 grams GOS per 4 ounce serving and less than about 1 gram lactose per 4 ounce serving.

A lactase-treated cottage cheese curd component is prepared by culturing a dairy substrate comprising a milk source, preferably skim milk, with a lactic acid-producing culture or by adding edible acid to reduce the pH to the desired acidity, such as about pH 4.3 to about 5.2, to form a coagulum. While it is generally preferred that the dairy substrate to be treated with lactase enzyme(s) includes at least about 7 percent lactose, skim milk is commonly used in the preparation of cottage cheese curd and includes only about 4 percent lactose. Lactase enzyme(s) having transgalactosylation and hydrolytic activities are added to the dairy substrate before or during culturing with a lactic acid culture. If the dairy substrate is treated with the lactase enzyme and lactic acid culture at the same time, the lactase enzyme(s) and lactic acid culture should have similar conditions of operability, such as pH, temperature, and reaction time, even though the conditions may be sub-optimal for the lactase enzyme. The mixture is held for a time and at a temperature effective to convert at least about 20 percent of the lactose present in the dairy substrate to GOS, such as about 0.25 to about 24 hours at about 20 to about 40°C, preferably for about 0.5 to about 16 hours at about 30 to about 40°C, although the precise conditions should be selected based on the optimum conditions for the particular lactase enzyme or combination of enzymes used. The mixture is held until it has ripened and a coagulum formed. If edible acid is used instead of a lactic acid-producing culture to acidify the dairy substrate, the lactase enzyme(s) having trans-galactosylation and hydrolytic activities is added prior to the addition of the acid and the dairy substrate is held for a time and at a temperature effective to convert at least 20 percent of the lactose present in the mixture to GOS and then the acid is added and the mixture permitted to form a coagulum. The curd is cut and then cooked, for example, at a temperature of about 48 to about 60°C. After cooking, the curd is drained and cooled. Most of the GOS and unconverted lactose is lost in the whey during the curd separation step because of the low molecular weight of the GOS, but a small percentage of the GOS is retained in the curd. If desired, additional steps can be taken to recover the GOS from the whey and recombine the GOS with the separated curd. For example, reverse osmosis, nanofiltration, size exclusion chromatography, or affinity chromatography can be used to recover GOS from the whey. However, such steps add significant time and cost to the manufacturing process. The cooled, drained curd can be used immediately or held at about 0 to about 5°C until needed.

A lactase-treated cottage cheese dressing component is prepared by first providing a dairy substrate comprising cream and other dairy ingredients, such as non-fat dry milk ("NFDM"), milk protein concentrate, whey protein concentrate, and the like. The dairy substrate to be treated with lactase enzyme(s) should include at least about 7 percent lactose. The lactase enzyme(s) having trans-galactosylation and hydrolytic activities is added to the dairy substrate and held for a time and at a temperature effective to convert at least about 20 percent of the lactose in the dressing to GOS, such as about 0.25 to about 24 hours at about 20 to about 70°C, preferably for about 0.5 to about 2 hours at about 40 to about 65°C, although the precise conditions should be selected based on the optimum conditions for the particular lactase enzyme or combination of enzymes used. The lactase-treated dressing is then pasteurized, such as at about 66 to about 93°C for about 1 second to about 30 minutes and cooled. The cooled dressing can be used immediately or held at about 0 to about 5°C until needed.

The cottage cheese product comprises about 50 to about 70 percent lactase-treated curd and about 50 to about 30 percent lactase-treated dressing, preferably about 60 percent lactase-treated curd and about 40 percent lactase-treated dressing to provide the cottage cheese product having at least about 0.5 gram GOS per 4 ounce serving and less than about 1 gram lactose per 4 ounce serving. For applications where it is acceptable for the lactose concentration to exceed about 1 gram per 4 ounce serving, it is preferable that the method be carried out where only the dressing component is prepared with a lactase treatment step. Such cottage cheese products comprise about 50 to about 70 percent curd and about 50 to about 30 percent lactase-treated dressing, preferably about 60 percent curd and about 40 percent lactase-treated dressing to provide the cottage cheese product having at least about 0.5 gram GOS per 4 ounce serving.

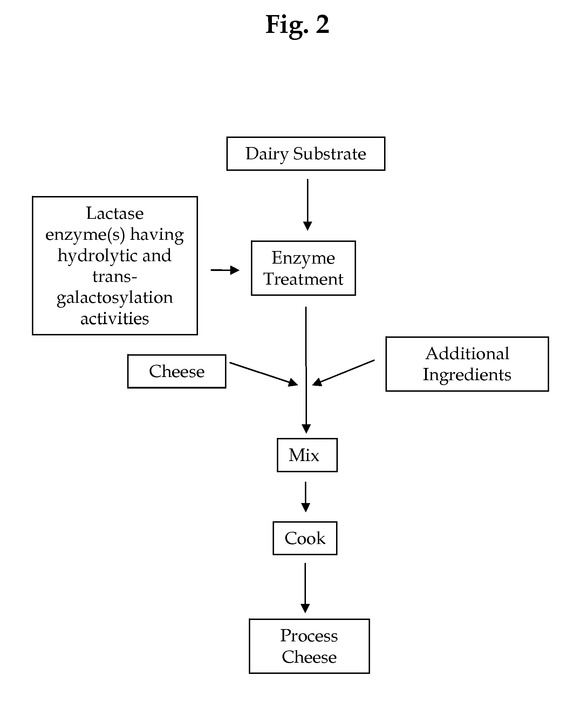

FIG. 2 illustrates an embodiment of a process for making process cheese having significantly increased GOS content and significantly reduced levels of lactose. Process having significantly increased GOS content and significantly reduced levels of lactose can be prepared by blending and cooking natural cheese with emulsifying salts and a dairy substrate containing significantly increased GOS content and significantly reduced of lactose. Generally, the dairy substrate is prepared by treating a dairy mixture having at least 7 percent lactose with lactase enzyme(s) having trans-galactosylation and hydrolytic activities. Suitable ingredients for the dairy mixture include milkfat, whey solids, NFDM, milk protein concentrate, whey protein concentrate, whey, or the like. The dairy ingredients may be dry powders or liquid concentrates and are typically hydrated to a slurry or "wet mix." The slurry should include at least about 7 percent lactose. The slurry is then treated with lactase enzyme(s) having transgalactosylation and hydrolytic activities for a time and at a temperature to convert at least about 20 percent of the lactose in the slurry to GOS, such as about 0.25 to about 24 hours at about 20 to about 70°C, preferably for about 0.5 to about 2 hours at about 40 to about 65°C, although the precise conditions should be selected based on the optimum conditions for the particular lactase enzyme or combination of enzymes used. The dairy substrate is added to any remaining ingredients, such as emulsifying salts, and blended with cheese (such as, for example, Cheddar cheese, Colby cheese, Swiss cheese, Brick cheese, Muenster cheese, pasta filata cheese, washed curd, and granular curd cheese) and cooked to form process cheese. The process cheese product has at least about 0.5 grams GOS per 1 ounce serving and less than about 1 gram lactose per 1 ounce serving.

Fat-free, low fat, or full fat cream cheese products can be produced using the methods described herein. For example, in traditional curd-type processes for making cream cheese, a mixture of milk and cream is cultured with lactic acid-forming bacteria to convert lactose to lactic acid. The culturing continues until the pH drops sufficiently to form a curd, which is then mechanically separated from the whey and the curd is processed to make the final cream cheese product. As an alternative to the culturing step used in traditional curd-type processes, the process may include the direct addition of a food grade acidulant. The food grade acidulant is an edible acid, such as citric acid, acetic acid, lactic acid, malic acid, fumaric acid, tartaric acid, hydrochloric acid, sulfuric acid, phosphoric acid, glucono-delta-lactone, the like, or combinations thereof. In newer curdless/wheyless-type processes, dairy ingredients, such as milk protein concentrate (MPC), whey protein concentrate (WPC), and cheese whey, and the like, are cultured to the desired pH and then processed to make the final cream cheese product without including a step to separate curds from whey. Further variations in known processes include processes where dairy ingredients such as MPC, WPC, and cheese whey are incorporated into otherwise traditional curd-type processes. Optional dairy ingredients, such as cream, milk, skim milk, buttermilk, cheese whey, any of the foregoing from which part of the water has been removed, anhydrous milkfat, dehydrated cream, skim milk cheese for manufacturing, and albumin from cheese whey, may be added to traditionally-produced curd or liquid cultured or acidified ultrafiltered retentate in a wheyless process. In another aspect, cream cheese can be made from rehydrated powdered ingredients in a wheyless process. Non-dairy fats (e.g., vegetable oil) may also be used, if desired.

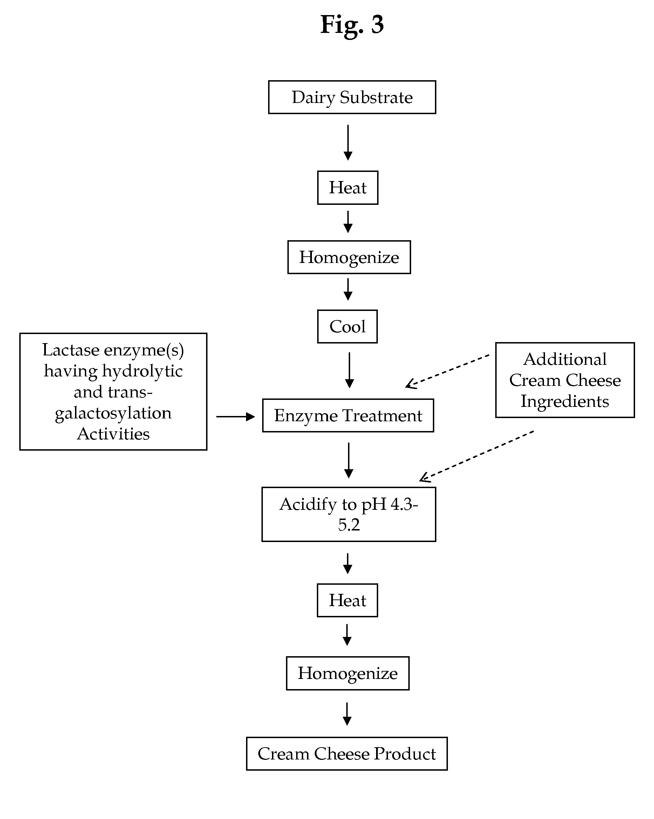

The processes illustrated in FIGS. 3-5 are merely illustrative of the incorporation of lactase enzyme(s) having hydrolytic and trans-galactosylation activities into a variety of cream cheese processes and are not intended to be limiting.

FIG. 3, for example, illustrates an embodiment of a wheyless process for making cream cheese containing GOS and having reduced levels of lactose. A dairy substrate having lactose levels of at least about 7 percent, preferably about 20 percent to about 50 percent, is prepared. Preferably, the dairy substrate comprises rehydrated ingredients, such as whey protein concentrate, milk protein concentrate, non-fat dry milk, and the like, and/or fluid dairy concentrates, such as whey, non-fat milk, whole milk, liquid whey protein concentrate, liquid milk protein concentrate, or the like. Optionally, the dairy substrate may further comprise additional cream cheese ingredients, such as cream and/or milkfat, but, if included, it is preferable to add these ingredients after enzyme treatment because such ingredients will dilute the lactose concentration of the dairy substrate. The dairy substrate is then pasteurized (such as about 66 to about 93°C for about 1 second to about 30 minutes) and homogenized (such as at about 2000 to about 10,000 psi) to produce a homogeneous dairy blend. The dairy blend is then cooled to about 20 to about 70°C using conventional methods. The cooled dairy blend is treated with lactase enzyme(s) having hydrolytic and transgalactosylation activities for a time and temperature effective for converting at least 20 percent of the lactose to GOS, such as about 0.25 to about 24 hours at about 20 to about 70°C, preferably for about 0.5 to about 2 hours at about 40 to about 65°C, although the precise conditions should be selected based on the optimum conditions for the particular lactase enzyme or combination of enzymes used, Optionally, as shown by the dotted line in FIG. 3, the fat-rich cream cheese components, such as cream and/or milkfat, can be added to the enzyme-treated dairy blend to form a cream cheese mixture after the enzyme treatment step rather than to the initial dairy substrate, in which case the mixture is heated to about 40 to about 70°C to assist in forming an emulsion and then homogenized to form a cream cheese blend. The blend is then cooled or allowed to cool to about 18 to about 45° C and treated to provide a pH of about 4.3 to about 5.2. The pH can be adjusted by adding an edible inorganic or organic acid or by treating with a lactic acid-producing culture and cultured to provide a pH of about 4.3 to about 5.2, such as at about 18 to about 45°C for a period of about 2 to about 24 hours. The acidified dairy blend is then heated to about 76 to about 93°C for about 5 to about 20 minutes to deactivate the cultures (if used for acidification) and/or to functionalize the dairy proteins. Additional cream cheese ingredients (such as fat (e.g., milkfat, cream non-dairy fats, or the like), stabilizers, salt, water, and the like) can be added before or after the enzyme treatment step. Preferably, about 0.1 to about 1.0 percent stabilizer and about 0.5 to about 1.5 percent salt are added. Other additives, such as sweeteners (natural and/or artificial), colorants, flavorings, and the like can also added, if desired. The heated mixture is then homogenized, such as at about 2000 to about 10,000 psi, to provide the final emulsified and texturized cream cheese product containing significantly increased GOS content and having substantially reduced lactose levels. The final cream cheese product comprises about 1 to about 36 percent fat, about 5 to about 15 percent protein, about 45 to about 75 percent moisture, at least about 0.5 g GOS per 1 ounce serving, and having significantly reduced lactose levels.

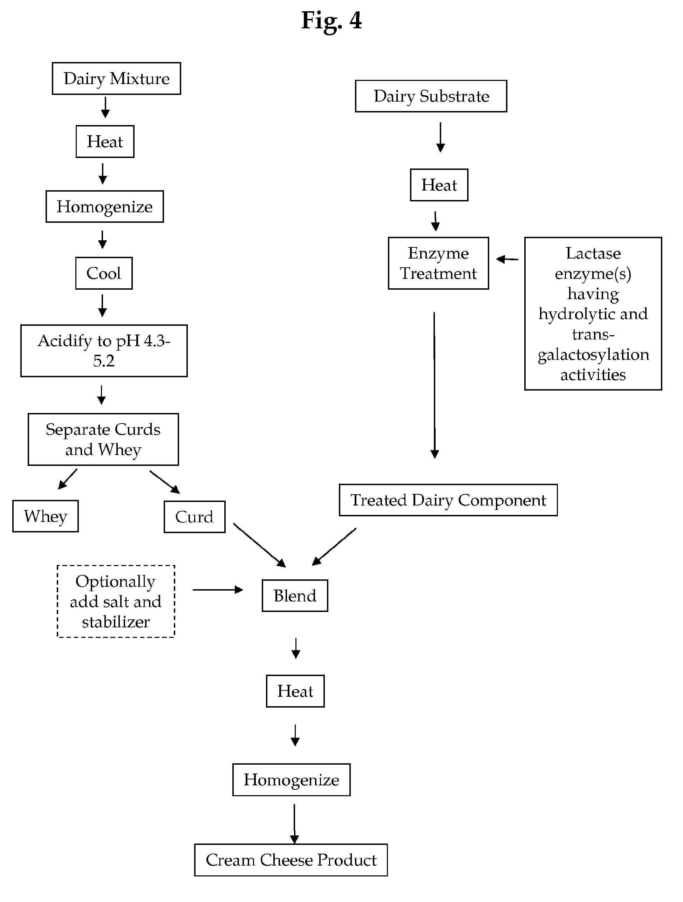

FIG. 4, for example, illustrates another embodiment of a process for making cream cheese having significantly increased GOS content and significantly reduced levels of lactose. A first dairy substrate is pasteurized, such as at about 66 to about 93° C for about 1 second to about 30 minutes, and homogenized, such as at about 2000 to about 10,000 psi. The mixture is then cooled to about 18 to about 45° C and the mixture is treated to provide a pH of about 4.3 to about 5.2. The pH can be adjusted by any means known in the art, such as by adding an edible inorganic or organic acid or by treating with a lactic acid-producing culture, such as at about 18 to about 45°C for a period of about 2 to about 24 hours, to form a curd. The curd is then separated from the whey or permeate stream by any means known in the art, such as by centrifugation or membrane filtration. A second dairy substrate blend having a lactose levels of at least about 7 percent, preferably 20 percent up to about 50 percent, is heated to a temperature of about 40 to about 73°C and treated with lactase enzyme(s) having hydrolytic and trans-galactosylation activities at a temperature and for a time effective for converting at least about 20 percent of the lactose to GOS, such as about 0.25 to about 24 hours at about 20 to about 70° C, preferably for about 0.5 to about 2 hours at about 40 to about 65°C. The enzyme-treated material is then blended with the separated curd prepared from the first dairy substrate to form a cream cheese mixture. Generally, about 10 to about 75 percent of the enzyme-treated material is blended with about 25 to about 90 percent of the curd. The relative amounts of curd and enzyme-treated material generally depend on the lactose content of the enzyme-treated material and the desired GOS content for the final cream cheese product. For example, if the GOS target in the final cream cheese product is 0.75 gram per serving and the enzyme-treated material includes 7 percent lactose, then about 24 percent curd should be combined with about 76 percent enzyme-treated material. Also for example, if the enzyme-treated slurry includes about 50 percent lactose and the GOS target in the final cream cheese is 0.75 gram per serving, then about 89 percent curd should be combined with about 11 percent enzyme-treated material. If the GOS target is higher than 0.75 gram per serving, then the proportion of curd would be decreased. One of ordinary skill in the art can readily calculate the necessary amounts of curd and enzyme-treated material to target a specific GOS content for the final cream cheese product. Optionally, stabilizer and salt can be added, preferably at about 0.1 to about 0.5 percent and about 0.5 to about 1 percent, respectively. The cream cheese mixture is heated to about 76 to about 93°C and cooked for about 5 to about 20 minutes to functionalize the dairy proteins and stabilizers and to pasteurize the cream cheese mixture. The hot cream cheese mixture is then homogenized, such as at about 2000 to about 10,000 psi, to form the final cream cheese product having significantly increased GOS content and significantly reduced lactose levels. The final cream cheese product comprises about 1 to about 36 percent fat, about 5 to about 15 percent protein, about 45 to about 75 percent moisture, at least about 0.5 grams GOS per 1 ounce serving, and having significantly reduced lactose levels.

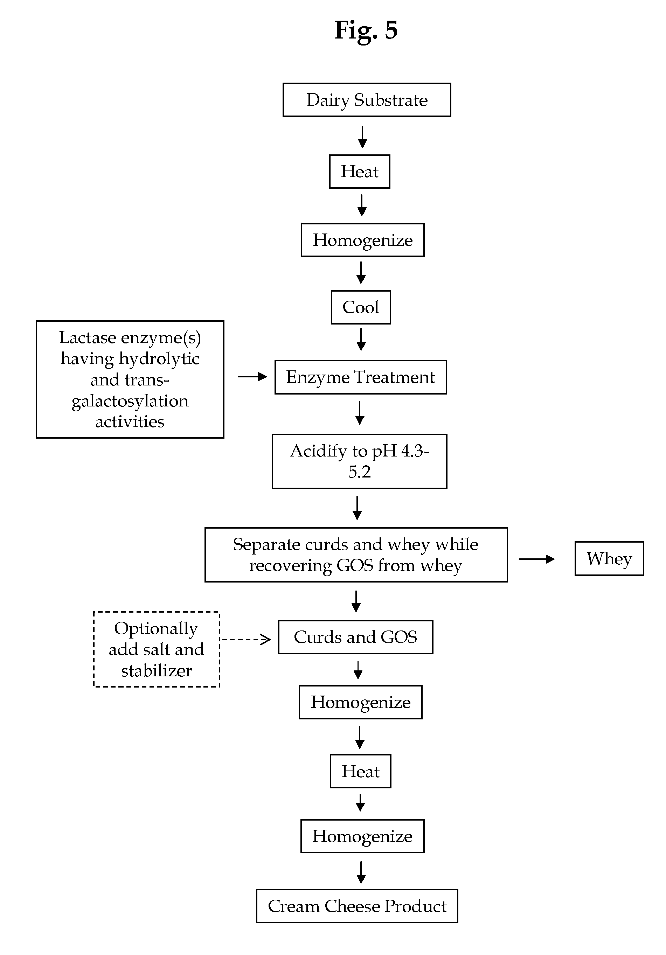

FIG. 5, for example, illustrates another embodiment of a process for making cream cheese containing significantly increased GOS content and having significantly reduced levels of lactose. In this aspect, traditional dairy ingredients such as milk and cream may be used in combination with alternative ingredients such as MPC, WPC, WPI, non-fat milk, anhydrous milkfat, non-dairy fat, and the like, either in liquid concentrate or dehydrated form. The dairy ingredients are blended to provide a dairy substrate having at least about 7 percent lactose. The dairy substrate is heated to about 60 to about 93°C and homogenized. The homogenized dairy substrate is then treated with lactase enzyme(s) having hydrolytic and trans-galactosylation activities for a time and at a temperature effective for converting at least about 20 percent of the lactose in the dairy blend to GOS, such as for about 0.25 to about 24 hours at about 20 to about 70°C, preferably for about 0.5 to about 2 hours at about 40 to about 65°C. The enzyme-treated dairy substrate is brought to about 18 to about 45°C and treated to provide a pH of about 4.3 to about 5.2. The acidified mixture is then separated into curd and whey using an operation effective for recovering GOS from the whey stream. For example, reverse osmosis, nanofiltration, size exclusion chromatography, or affinity chromatography can be used to recover GOS from the whey. Typical curds and whey separation processes such as centrifugation or ultrafiltration would not be suitable because GOS has a molecular weight under 1500 Da and most would be lost in the separated whey of such operations. The recovered GOS is combined with the separated curd and then heated to about 76 to about 93°C. Optionally, additional cream cheese ingredients can be added, if desired, to the hot mixture with agitation. Preferably, about 0.5 to about 1.5 percent salt and about 0.1 to about 1.0 percent stabilizer are added. The mixture is held at about 66 to about 93°C for about 1 second to about 30-minutes to deactivate the enzymes and cultures (if used), functionalize the dairy proteins and stabilizers (if used), and provide a final pasteurization. The mixture is then homogenized, such as at about 2000 to about 10,000 psi, to emulsify and texturize the cream cheese containing at least about 0.5 grams GOS per 1 ounce serving and having significantly reduced lactose levels.

In yet another aspect, a dairy substrate having at least about 7 percent lactose can be treated with lactase enzyme(s) having hydrolytic and transgalactosylation activities for a time and at a temperature effective for converting at least 20 percent of the lactose present in the dairy substrate to GOS. The treated dairy substrate can then be treated, such as, for example, by freezing or dehydrating, and stored for use in a cream cheese process at a later time.

One skilled in the art will recognize that the order of the various process steps described herein can be modified but should be selected so as not to result in a loss in overall cheese yield, reduce GOS content, or increase lactose levels. In other words, modifications to the cheese processes should still result in cheese products having at least about 0.5 grams GOS per 1 ounce serving and less than about 1 gram lactose per 1 ounce serving.

Generally, the dairy substrate should contain at least about 7 percent lactose because the trans-galactosylation activity of the lactase enzyme is less efficient in dairy substrates having less than about 7 percent lactose. Preferably, the dairy substrate contains about 20 to about 50 percent lactose. Dairy substrates having lactose concentrations higher than 50 percent can be used, if desired, as long as the lactose remains soluble at such increased concentrations. However, lactose generally is not soluble at concentrations greater than 50 percent.

The processes provided herein utilize lactase enzyme or a combination of lactase enzymes having hydrolytic and trans-galactosylation activities, with the latter activity producing the desired GOS. Hydrolysis is the first step in GOS production, as lactose must be split to make glucose and galactose. In higher lactose concentrations (e.g., lactose concentrations greater than about 7 percent), transgalactosylation is favored and galactose split from the lactose molecules are appended onto either lactose or an oligomer, Under conditions that are unfavorable to transgalactosylation (e.g., lactose concentrations of less than 7 percent), galactose accumulates as a hydrolysis product. Trans-galactosylation is favored over hydrolysis when the reaction is conducted in dairy substrates having relatively elevated lactose concentrations, such as at least about 7 percent lactose. While the processes described herein could be conducted using a dairy substrate comprising fluid milk, it is preferable to provide a dairy substrate containing at least about 7 percent lactose, preferably at least about 20 to about 50 percent lactose. Fluid milk contains about 3.5 to about 4 percent lactose. Certain dairy ingredients, such as dried and concentrated ingredients, contain much higher lactose levels. For example, dry whey contains about 78 to about 80 percent lactose and non-fat dry milk (NFDM) contains about 52 percent lactose. Dry whey protein concentrates (WPC) contain up to about 48.5 percent lactose while fluid whey concentrate contains about 37.5 percent lactose. Other dairy ingredients contain low lactose levels. For example, cream contains about 2 percent lactose while anhydrous milkfat contains little or no lactose. Preferred dairy substrates for use in the processes described herein include powdered or concentrated liquid dairy ingredients, such as whey protein concentrate (WPC), milk protein concentrate (MPC), cheese whey, skim milk, milk permeate and whey permeate (which are the by-products of ultrafiltration membrane separation of milk and whey), and the like, which replace part or all of conventional starting materials, such as mixtures of fluid milk and cream. Because the trans-galactosylation reaction has superior kinetics at high concentrations of lactose and such high concentrations are easily achieved by using a dairy substrate comprising rehydrated powdered and/or concentrated liquid dairy ingredients, preferred dairy substrates include powdered and concentrated liquid dairy ingredients. Rehydrated powdered and/or concentrated liquid dairy ingredients are preferred dairy substrates for the conversion of lactose to GOS by lactase enzymes because these ingredients can be readily used to prepare a dairy substrate having the desired lactose concentration. Dairy substrates comprising powdered and/or concentrated liquid dairy ingredients also advantageously provide other components in the final cream cheese, product, such as protein. Additionally, in newer "wheyless" cream cheese processes (i.e., cream cheese processes not involving a whey removal step), powdered dairy ingredients can be reconstituted in water to provide a moisture content similar to that found in the finished cream cheese product such that no whey separation step is required.

Generally, the lactose-containing dairy substrate is contacted with lactase enzyme(s) having hydrolytic and trans-galactosylation activities for a time and at a temperature effective for converting at least about 20 percent of the lactose in the dairy substrate to GOS. Preferably at least about 30 percent of the lactose present in the dairy substrate is converted to GOS. Typically, due to equilibrium considerations, no more than about 80 percent of the lactose in the dairy substrate is converted to GOS or to hydrolysis products (e.g., the major free hydrolysis product is typically glucose and the minor free hydrolysis product is typically galactose). Of the lactose converted to either GOS or hydrolysis products, up to about 75 percent may be converted to GOS with the remainder being converted to hydrolysis products, as limited by stoichiometry.

In an important aspect, the lactase enzyme(s) converts about 25 to about 70 percent of the lactose present in the dairy substrate to GOS and hydrolysis products, with at least about 20 percent, preferably at least about 30 percent, more preferably at least about 50 percent, and even more preferably at least about 70 percent of the converted lactose being GOS and the balance of the converted GOS being hydrolysis products, such as glucose and galactose.

As one of ordinary skill in the art will recognize, the ratio of GOS to hydrolysis products produced in the enzymatic conversion of lactose depends on numerous factors, such as the activity of the lactase enzyme(s) selected and operating conditions such as temperature, pH, lactose concentration, enzyme concentration, and ionic strength. For example, the reaction can be conducted at lactose concentrations below 7 percent, but, under such conditions, a lower proportion (generally about 20 to about 50 percent) of the lactose converted will form GOS and the balance will form hydrolysis products. Also, for example, the reaction can be conducted at lower temperatures (e.g., about 15 to about 30°C) but a longer reaction time, such as about 2 to about 24 hours, may be necessary to achieve the desired conversion to GOS.

Enzymes useful in the methods described herein include any enzyme preparations known in the art, such as purified enzymes or enzymes provided in whole cells or disrupted cells of cultures producing lactase enzymes having hydrolytic and trans-galactosylation activity (e.g., cells of *Bifidobacterium infants, Aspergillus oryzae, Penicillium simplicissum, Bullera singularis,* and the like). Lactase enzymes having both hydrolytic and trans-galactosylation activities can be used. If desired, a combination of lactase enzymes can be used to provide a mixture of enzymes having hydrolytic and trans-galactosylation activities. Active or non-active cultures containing lactase enzymes having hydrolytic and trans-galactosylation activities can be used, if desired.

Preferred enzymes for the methods described herein have a ratio of transgalactosylation activity to hydrolytic activity above about 0.3, preferably above about 0.5, and more preferably above about 0.8. Trans-galactosylation activity can be measured by reacting the lactase enzyme with lactose and measuring the formation of GOS by HPLC, such as described by Nakao et al., Applied Microbiology and Biotechnology, 40(5): 657-663 (January 1994) or in Albayrak et al., Biotechnol. Progress, 18: 240-251 (2002), which are incorporated herein by reference in their entireties. Preferred lactase enzymes include Biolacta (Amano Enzymes) and Maxilact LX (Novozymes). Hydrolytic activity can be calculated by treating ONPG (o-nitrophenyl-beta-D-galactopyranoside) with lactase enzyme at pH 7 and 37° C and measuring hydrolysis by following the increase in absorbance at 420 nm, such as described by J. H. Miller, Experiments in Molecular Genetics, Cold Spring Harbor Laboratory, Cold Spring Harbor, NY (1972), which is incorporated herein by reference in its entirety.

In a preferred aspect, the enzyme treatment is carried out at about 40 to about 65 °C for about 0.5 to about 2 hours. Generally, lactase enzyme(s) having transgalactosylation activity is used at about 125 to about 5000 beta-galactosidase enzyme units per 100 grams dairy substrate, preferably about 500 to about 1590 units per 100 grams dairy substrate. Of course lesser or greater amounts of enzyme can be used, if desired, and the reaction times may have to be adjusted, as will be readily ascertained by one of ordinary skill in the art, to achieve the desired conversion of lactose to GOS. Preferably, the amount of lactase enzyme(s) added to the mixture is selected as an amount that balances the cost of the enzyme and the expense of prolonged enzyme treatment periods.

The treated dairy substrate can be acidified using any method known in the art. In one aspect, the dairy substrate can be directly acidified with one or more food grade acids, such as citric acid, acetic acid, lactic acid, malic acid, fumaric acid, tartaric acid, hydrochloric acid, sulfuric acid, phosphoric acid, gluconic acid, gluconodelta-lactone, the like, or a combination thereof. Generalfy, the pH of the dairy substrate is lowered to a level of about 4.3 to about 5.2, preferably to about 4.6 to about 4.8. Alternatively, the treated dairy substrate can be acidified by treating with a lactic acid-producing cream cheese culture for a time and temperature effective to reach a pH of about 4.3 to about 5.2, such as at a temperature of about 15 to about 45° C for about 2 to about 24 hours, preferably at about 18 to about 22° for about 12 to about 16 hours. Examples of suitable cream cheese cultures include, but are not limited to, L. *lactis,* L. *acidophilus, L. lactis* subsp. *cremoris, L. bulgaricus, S. thermophilus, L. casei, L. lactis, L. helveticus,* or other lactic culture systems. Preferred cream cheese cultures for use in the processes described herein include D11S and DX-37B (Chr. Hansen, Milwaukee, WI) which contain a mixture of lactic acid bacteria.

As is well known in the art, the lactic acid-producing culture can be added as a starter culture. The starter culture is typically established by inoculating lactic acid-producing bacteria into a relatively small quantity of dairy substrate compared to the amount to be used in the cream cheese production process. The culture is incubated at a temperature that supports multiplication of the bacteria before being used to inoculate the full volume of dairy substrate for the batch of cream cheese production. Alternatively, a direct vat set ("DVS") culture can be used, which comprises a frozen or dried culture concentrate that is added directly to the cream cheese mix.

It should be recognized that the enzyme treatment and culturing step can be combined (in processes where the culturing step is used for acidification) into a single step by adding the lactase enzyme(s) and lactic acid fermenting culture to the culture vessel at approximately the same time. To allow such a combined step, the enzyme(s) and cultures should have similar conditions of operability, such as pH, temperature, and reaction time. Alternatively, a multifunctional culture comprising one or more microorganisms which both produce lactic acid by fermentation and also produce enzymes having hydrolytic and trans-galactosylation activity can be used.

In one aspect, the dairy substrate is pasteurized using conventional techniques prior to culturing in processes including a culturing step. Preferably, pasteurization is carried out at a temperature of about 66 to about 93 °C. for about 1 second to about 30 minutes, such as in a plate and frame heat exchanger. Generally, the pasteurization process is effective to deactivate the lactase enzyme(s). Thus, the lactase enzyme(s) generally functions as a processing aid and no active enzyme remains in the final cream cheese product.

In addition to the lactose consumed by the lactase enzyme(s), if a lactose-fermenting culture is used in the acidification step, some of the lactose is consumed by the action of the lactose-fermenting culture to convert lactose into lactic acid. Residual (i.e., unconverted or unreacted) lactose ends up in the final cream cheese product unless a whey separation step is included in the process. Generally, some unconverted lactose is removed with the whey in whey separation steps. The amount of lactose in the final cream cheese product can be further reduced by, if used, including dairy components containing little or no lactose, such as, for example, water, cream, and milkfat. Because including such ingredients would dilute the lactose concentration in the initial dairy substrate, it is advantageous to add all or a portion of these lower lactose components, particularly water, after the enzyme treatment step.

Following acidification, either by direct acidification or by culturing, the mixture may then be subjected to a heating step, preferably to about 76°C to about 93°C for about 5 to about 20 minutes to facilitate functionalization of the dairy proteins. The heated mixture can then be blended with additional cream cheese ingredients, such as emulsifying and/or stabilizing salts, common salt, hydrocolloids such as gums, starches, maltodextrins, the like, or combinations thereof, and other common cream cheese additives. It is preferred to add about 0.5 to about 1.5 percent salt and about 0.1 to about 1.0 percent of one or more selected stabilizers, such as food grade hydrocolloids such as gums, starches, maltodextrins, and the like. Examples of suitable gums include carob, guar, xanthan, carrageenan, gelatin, the like, or a mixture thereof. For example, a mixture of carob and xanthan gums is preferred. The starch may be any food starch, such as modified corn starch, potato starch, tapioca starch, the like, or mixtures thereof. Maltodextrins such as modified maltodextrin ("C*delight" MD0170, Cargill, Minneapolis, MN) can be used. Preferably, the starch is a modified waxy maize such as Maxigel 700 (Tate & Lyle, Decatur, IL).

Preferably, the additional cream cheese ingredients are added to the hot dairy mixture which is held for an additional about 5 to about 20 minutes at about 76 to about 93°C to facilitate solubilization and functionalization of the stabilizer and to pasteurize the mixture. Finally, the hot mixture is homogenized to emulsify and texturize the cream cheese product. Optionally, other additives such as calcium, vitamins, flavorings, colorants, and other minerals may be added, preferably before homogenization. Natural dairy flavors or other flavors may optionally be added within the scope of the processes described herein. A number of procedures for adding flavors to cream cheeses are known to those skilled in the art, and may easily be incorporated into the processes described herein. It is preferable to add flavors late in the process, such as before the final homogenization step, to avoid loss during processing steps. Pasteurized fruits or fruit pieces and granular condiments, such as nuts, should be added after the final homogenization step. Aseptic fruit purees and the like can be swirled or blended with the partially cooled and homogenized cream cheese just prior to packaging.

Homogenization may be performed at many different steps of the process. Typically, the dairy substrate is mixed to form a substantially homogeneous mixture before proceeding to subsequent steps. Generally, homogenization can be carried out using conventional techniques and equipment, such as with a Gaulin 2-stage homogenizer (APV, Lake Mills, WI). Homogenization is typically carried out at increased pressures but any method that is effective to homogenize dairy substrates can be used. Preferably, the mixture is subjected to a two stage homogenization process, with the first stage being at a pressure of about 2000 to about 10,000 psi (preferably about 3000 to about 5000 psi) and the second stage being at a pressure of about 200 to about 1000 psi (preferably about 500 to about 1000 psi). Alternatively, a one stage homogenization step may be used, if desired. Preferably, a homogenization step is performed as the final step in the process to obtain the desired cream cheese texture. The final cream cheese product may be packaged by any process known in the art. Preferably, the final homogenized product is hot packed at about 68° C but may be cooled prior to packaging, if desired.

Generally, the cream cheese products having significantly increased GOS content and substantially reduced lactose levels as described herein have a viscosity from about 500 to about 1000 cps at 50°C, which is slightly higher than cream cheese products not containing GOS. Of course, the viscosity of the final cream cheese can be adjusted as desired. Cream cheese viscosity (yield stress) is typically measured using a Haake VT550 viscometer (Haake, Paramus NJ) as described in S. Breidinger & J. Steffe , J. Food Sci., 66(3): 453 (2001), which is incorporated herein by reference in its entirety. If necessary, the viscosity can be adjusted by the addition of viscosity modifiers. For example, the viscosity could be lowered, if desired, by the addition of water or by reducing the amount of stabilizing and thickening hydrocolloids added during processing. The viscosity can be increased, if desired, by addition of a thickening agent (e.g., natural or modified starch, gum, hydrocolloid, and the like). Generally, such viscosity modifiers, if used, are added at levels less than about 1 percent.

The cream cheese products provided herein have a firm, smooth, and spreadable texture with a pleasant, mild dairy flavor. It was surprisingly found that GOS acts as a stabilizer, thus permitting reduced use of stabilizers, or by allowing for increased moisture content without syneresis.

Furthermore, the processes provide reduced lactose cream cheese products without undesirable increase in sweet flavor. Even though glucose has a slightly sweeter taste than lactose, the amount of glucose formed by hydrolysis provides less sweetness than that of the initial lactose so there is no undesirable increase in sweet taste to the final cream cheese product provided by the hydrolysis products. The desired ratio of trans-galactosylation to hydrolytic activity described herein provides an appropriate balance of lactose hydrolysis to GOS formation to contribute to the overall flavor of the final cream cheese product.

The following examples describe and illustrate the processes and products described herein. These examples are intended to be merely illustrative of the processes described herein and not limiting thereof in either scope or spirit. Those skilled in the art will readily understand that variations of the materials, conditions, and processes described in these examples can be used. All references cited herein are incorporated by reference in their entirety. Unless otherwise noted, all percentages and ratios are by weight.

### EXAMPLES

**Example 1.** This example illustrates the process of the invention shown in FIG. 3. A cream cheese product was prepared using the following process: (1) mixed 25.1 kg cream, 36.95 kg water, 1.45 kg dried whey (Associated Milk Producers, Inc., Blair, WI) and 9.23 kg WPC50 (50 percent whey protein concentrate from Associated Milk Producers, Inc., Blair, WI) to form a dairy substrate; (2) preheated the dairy substrate to 60° C and homogenizing the dairy substrate at 5000/500 psi using a Gaulin two-stage homogenizer (APV, Lake Mills, WI); and (3) pasteurized the homogenized dairy substrate in a plate heat exchanger at 81.1 °C for about 22 seconds and then cooling the homogenized dairy substrate in the plate to 22°C. The cooled dairy substrate was then divided and used to prepare cream cheese products using both inventive and a control method without enzyme addition as described below.

The inventive sample was prepared as follows: 100 g of the dairy substrate was treated with 0.025 percent Biolacta enzyme (Amano, Elgin, IL) enzyme for 1 hour at 60° C, which has a ratio of trans-galactosylation to hydrolysis of about 0.6. Following enzyme treatment, the mixture was then direct acidified to pH 4.8 with 88 percent lactic acid. The resulting cream cheese was heated to 93.3° C for 10 minutes to functionalize the dairy proteins and deactivate the enzyme.

For purposes of comparison, a control cream cheese was prepared using a process identical to that described above except that no enzyme treatment step was used.

The viscosity of the control and inventive cream cheese samples were measured at 50° C using a Viscoanalyzer RVA (Newport Scientific). The lactose and GOS content of the control and inventive samples were measured by HPLC (Waters (Waltham, MA)) using an Aminex HPX-87C column (300x7.8mm; Biorad, Hercules, CA), a 0.03N nitric acid mobile phase, and a Waters 410 RI detertor (Waters, Milford, MA).

The control cream cheese sample contained 7.5 percent lactose, no detectable GOS, and had a viscosity of 634 cp. The inventive cream cheese sample contained 4.0 percent lactose, 2.5 percent GOS, and had a viscosity of 934 cp. The treatment with lactase enzyme having hydrolytic and trans-galactosylation activities had a significant effect on both the GOS and lactose levels of the inventive sample.

**Example 2.** This example illustrates another embodiment according to FIG. 3 and is similar to Example 1 but adds cream after enzyme acidification and uses cream cheese cultures for acidification. A slurry containing 9.93 kg water, 8.57 kg WPC50, and 1.36 kg dried whey was heated at 27° C for 22 seconds and homogenized at 5000/500 psi using a Gaulin two-stage homogenizer (APV, Lake Mills, WI). The homogenized slurry was blended with 0.05 percent Biolacta enzyme and incubated for 1 hour at 60° C. A portion of this slurry (18.36 kg) was then mixed with 20.88 kg cream and 23.8 kg water. For purposes of comparison, the final percentage of each ingredient is approximately the same as in Example 1. The mixture was preheated to 60° C, homogenized at 5000/500 psi using a Gaulin two-stage homogenizer, pasteurized at 81.1° C for about 22 seconds, cooled to 22° C, inoculated with cream cheese cultures (DVS DX-37B, Chr. Hansen, Milwaukee, WI) and cultured overnight at 20° C. The cultured mixture was then heated to 93.3° C and held for 10 minutes. Following heat treatment, 43.4 kg of the hot curd was combined with 22.7 grams sorbic acid, 450 grams salt, 172.5 grams carob gum, 31.8 grams xanthan gum, 408.6 grams tricalcium phosphate, and 957.9 grams modified maltodextrin (C-delight MD1970; Cargill, Minneapolis, MN). The mixture was then held at 79° C for an additional 10 minutes to functionalize the stabilizers. The heated mixture was then homogenized at 5000/500 psi, packed at 73.9° C, and let cool overnight to 10° C.

The amount of GOS present in the final product was estimated by measuring the amount of lactose in the starting material and measuring the amount of lactose and hydrolysis products (glucose and galactose) present in the final product and taking the difference. The resulting cream cheese had a calculated GOS content of 1.5 percent and a lactose level of 2.9 percent. The cultured control sample contained 5.35 percent lactose and was estimated to contain no GOS. The firmness of the cream cheese was measured using TAXT Texture analyzer (SMS, Algonquin IL, 1 cm diameter cylindrical probe) and found to be 167 grams for the inventive cream cheese as compared to 142 grams for a control sample made without enzyme treatment.

Similar results would be expected by carrying out the methods described in FIGS. 4 and 5.

Numerous modifications and variations in practice of the processes described herein are expected to occur to those skilled in the art upon consideration of the foregoing detailed description. Consequently, such modifications and variations are intended to be included within the scope of the following claims.

## Claims

1. A method for producing a galacto-oligosaccharide-containing cheese product having significantly reduced lactose levels comprising:
a) treating a lactose-containing dairy substrate with lactase enzyme(s) having trans-galactosylation activity and hydrolytic activities for a time and at a temperature effective for converting at least 20 percent of the lactose present in the dairy substrate to galacto-oligosaccharides; and
b) processing the treated dairy substrate to provide a cheese product having at least about 0.5 grams galacto-oligosaccharides per serving, and less than about 1 gram lactose per serving,
wherein the cheese product is selected from the group consisting of cottage cheese, process cheese, and cream cheese, wherein the lactose-containing dairy substrate has at least about 7 percent lactose for process cheese and cream cheese and at least about 4 percent lactose for cottage cheese, and wherein the serving size for process cheese and cream cheese is 1 ounce and the serving size for cottage cheese is 4 ounces.

2. A method for producing a galacto-oligosaccharide-containing cream cheese product having significantly reduced lactose levels, the method comprising:
(1) preparing a dairy substrate comprising at least about 7 percent lactose;
(2) heating the dairy substrate to about 60 to about 93°C;
(3) homogenizing the heated dairy substrate to form a dairy blend;
(4) cooling the dairy blend or allowing the dairy blend to cool to about 20 to about 70°C;
(5) treating the dairy blend with lactase enzyme(s) having trans-galactosylation and hydrolytic activities at a temperature and for a time effective for converting at least about 20 percent of the lactose present in the dairy blend to galacto-oligosaccharides;
(6) adjusting the pH of the enzyme-treated dairy blend to about 4.3 to abort 5.2;
(7) heating the pH-adjusted dairy blend to about 76 to about 93°C for about 5 to about 20 minutes;
(8) homogenizing the heated dairy blond to provide the cream cheese product having about 1 to about 36 percent fat, about 5 to about 15 percent protein, about 45 percent to about 75 percent moisture, at least about 0.5 grams galacto-oligosaccharides per 1 ounce serving, and less than about 1 gram lactose per 1 ounce serving.

3. A method for producing a galacto-oligosaccharide-containing cream cheese product having significantly reduced lactose levels, the method comprising:
(1) preparing a dairy curd component by a comprising:
(a) preparing a dairy mixture selected from the group consisting of milk, cream, milkfat, and mixtures thereof;
(b) heating the dairy mixture to about 60 to about 93°C;
(c) homogenizing the heated dairy mixture to form a homogenized blend;
(d) cooling the homogenized blend to about 18 to about 45°C;
(e) adjusting the pH of the homogenized blend to about 4.3 to about 5.2 to form curd and whey; and
(f) separating the curd from the whey formed in step (e) to form a dairy curd component;
(2) preparing an enzyme-treated dairy component by a process comprising:
(a) preparing a dairy substrate having a lactose levels of at least about 7 percent;
(b) heating the dairy substrate to about 20 to about 70°C;
(c) treating the dairy substrate with lactase enzyme(s) having transgalactosylation and hydrolytic activities at a temperature and for a time effective for converting at least about 20 percent of the lactose present in the dairy substrate to galacto-oligosaccharides to form an enzyme-treated dairy component;
(3) blending about 10 to about 75 percent of the enzyme-treated dairy component of step (2) with about 25 to about 90 percent dairy curd component of step (1) to provide a cream cheese blend;
(4) heating the cream cheese blond to about 77 to about 93°C for about 5 to about 20 minutes; and
(5) homogenizing the cream cheese blend to form the final cream cheese product comprising having about 1 to about 36 percent fat, about 5 to about 15 percent protein, about 45 to about 75 percent moisture, at least about 0.5 grams galacto-oligosaccharides per 1 ounce serving, and less than about 1 gram lactose per 1 ounce serving.

4. A method for producing a galacto-oligosaccharide-containing cream cheese product having significantly reduced lactose levels, the comprising:
(1) preparing a dairy substrate having a lactose levels of at least about 7 percent;
(2) heating the dairy substrate to about 60 to about 93°C;
(3) homogenizing the heated dairy substrate to form a dairy blend;
(4) cooling the dairy blend or allowing the dairy blend to cool to about 20 to about 70°C;
(5) treating the dairy blend with lactase enzyme(s) having trans-galactosylation and hydrolytic activities at a temperature and for a time effective to convert at least about 20 percent of the lactose present in the dairy blend to galacto-oligosaccharides to provide an enzyme-treated dairy blend;
(6) adjusting the pH of the enzyme-treated dairy blend to about 4.3 to about 5.2 to form curds and whey;
(7) separating the curds from the whey such that galacto-oligosaccharides is recovered from the whey and the galacto-oligosaccharides are combined with the separated curds for subsequent processing;
(8) homogenizing the separated curds and galacto-oligosaccharides to form a homogenized cream cheese blend;
(9) heating the cream cheese blend to about 77 to about 93°C; and
(10) homogenizing the heated cream cheese blend to produce the final cream cheese product having about 1 to about 36 percent fat, about 5 to abort 15 percent protein, about 45 percent to about 75 percent moisture, at least about 0.5 grams galacto-oligosaccharides per 1 ounce serving, and less than about 1 gram lactose per 1 ounce serving.

5. The method of any one of Claims 2 to 4, wherein the pH is adjusted by adding an edible acid to the treated dairy blend.

6. The method of any one of claims 2 to 4, wherein the pH is adjusted by treating the cooled dairy blend or the enzyme-treated dairy blend with a lactic acid-producing culture.

7. The method of claim 1, wherein the cheese product is cream cheese.

8. A galacto-oligosaccharide-containing cream cheese product having significantly reduced lactose levels prepared by a process comprising:
a) treating a lactose-containing dairy substrate having at least about 7 percent lactose with lactase enzyme(s) having a ratio of trans-galactosylation activity to hydrolytic activity of about 0.3 to about 1.0 for a time and at a temperature effective for converting at least 20 percent of the lactose present in the dairy substrate to galacto-oligosaccharides;
b) processing the treated dairy substrate to provide a cream cheese product having about 1 to about 36 percent fat, about 5 to about 15 percent protein, about 45 percent to about 75 percent moisture, at least about 0.5 grams galacto-oligosaccharides per 1 ounce serving, and less than about 1 gram lactose per 1 ounce serving.

9. The method or product of any one of Claims 1 to 8 wherein the dairy substrate is selected from the group consisting of milk, cream, milk protein concentrate, whey protein concentrate, cheese whey, non-fat milk, non-dairy fat, milkfat and mixtures thereof.

10. The method or product of any one of Claims 1 to 9, wherein the lactase enzymes have a ratio of transgalactosylation activity to hydrolysis activity of about 0.3 to about 1.0 or of about 0.7 to about 1.0.

11. The method or product of any one of Claims 1 to 10, wherein the cheese product contains at least about 0.7 grams of galacto-oligosaccharides per serving.

12. The method or product of Claims 2, 3, 4 or 8, wherein the lactose-containing dairy substrate includes about 7 to about 50 percent lactose.

13. The method of claim 4 further comprising adding about 0.5 to about 1 percent salt and about 0.1 to about 1 percent stabilizer to the heated cream cheese blend.
